(19) Europäisches Patentamt
European Patent Office
Office européen des brevets

(11) EP 1 324 411 A2

(12) **EUROPEAN PATENT APPLICATION**

(43) Date of publication:
02.07.2003 Bulletin 2003/27

(51) Int Cl.7: **H01M 8/02**

(21) Application number: 02028789.2

(22) Date of filing: 23.12.2002

(84) Designated Contracting States:
**AT BE BG CH CY CZ DE DK EE ES FI FR GB GR IE IT LI LU MC NL PT SE SI SK TR**
Designated Extension States:
**AL LT LV MK RO**

(30) Priority: 26.12.2001 JP 2001394448

(71) Applicant: **MITSUBISHI CHEMICAL CORPORATION**
Chiyoda-ku, Tokyo 100-0005 (JP)

(72) Inventors:
• **Kitade, Taku, Mitsubishi Chem. Cor.**
Yokohama-shi, Kanagawa 227-0033 (JP)
• **Suzuki, Mitsuo, Mitsubishi Chem. Cor.**
Yokohama-shi, Kanagawa 227-0033 (JP)

(74) Representative: **VOSSIUS & PARTNER**
Siebertstrasse 4
81675 München (DE)

(54) **Composite material for fuel cell separator molding and production method thereof, and fuel cell separator which uses the composite material and production method thereof**

(57)     The invention relates to a composite material for fuel cell separator molding, which comprises a carbonaceous powder dispersed in a matrix, wherein said matrix comprises a resin coat cover for coating said carbonaceous powder and a resin reinforcing phase having higher heat resistance than a resin which forms said resin coat cover; a production method of the composite material; a fuel cell separator which uses the composite material; and a production method thereof.

FIG. 1B

3 : RESIN REINFORCING PHASE
4 : VOID
1 : CARBONACEOUS POWDER
2 : RESIN COAT COVER

EP 1 324 411 A2

**Description**

This invention relates to a composite material for fuel cell separator molding and a production method thereof, and a fuel cell separator which uses the composite material and a production method thereof.

Particularly, it relates to a composite material for fuel cell separator molding, for use in the production of a fuel cell separator having both of excellent mechanical characteristics and electric characteristics, and a production method thereof, and a fuel cell separator which uses the composite material and a production method thereof.

In recent years, a fuel cell making use of the reaction of hydrogen with oxygen has been drawing attention as a power generation system which meets the resource problems and environmental problems and its realization has been examined in various fields.

In the basic structure of the fuel cell, electrolytes are interposed between porous positive and negative electrode plates, and scores to hundreds of cells arranged with flat separators having gas barrier property and conductivity are laminated on both outer sides of the plates, and its typical examples include a ribbed electrode system in which grooves as channels for reaction gasses such as hydrogen and air are engraved on the separator side surface of each of the positive and negative electrode plates and a ribbed separator system in which they are engraved on the surface of each separator. In general, the separator to be used in such a fuel cell is produced by mixing a carbonaceous powder as the conductive material with a binder comprising a resin such as a thermosetting resin or a thermoplastic resin, typified by a phenol resin, and compression-molding the mixture under heating.

For example, Unexamined Published Japanese Patent Application No. 2000-182630 (U.S. Patent Publication No. 20020068210) describes that a fuel cell separator is obtained by using a thermosetting resin such as phenol resin, polycarbodiimide resin, furfuryl alcohol resin, epoxy resin, cellulose, urea resin, melamine resin, unsaturated polyester resin, silicone resin, diallyl phthalate resin, bismaleimidotriazine resin, polyaminobismaleimide resin or aromatic polyimide resin; a thermoplastic resin such as polyethylene, polystyrene, polypropylene, methyl polymethacrylate, polyethylene terephthalate, polybutylene terephthalate, polyether sulfone, polycarbonate, polyoxamethylene, polyamide, polyimide, polyamidoimide, polyvinyl alcohol, polyvinyl chloride, polyphenyl sulfone, polyether ether ketone, polysulfone, polyether ketone, polyallylate, polyether imide, fluorine resin, polyoxybenzoyl ester resin, liquid crystal polyester resin, aromatic polyester, polyacetal, polyallylsulfone, polybenzoimidazole, polyether nitrile, polythioether sulfone or polyphenylene ether; or rubber such as fluorine rubber, silicone rubber, butyl rubber, chloroprene rubber, nitrile rubber, nitrilechloroprene rubber, chlorinated butyl rubber, epichlorohydrin rubber, epichlorohydrin-ethylene oxide rubber, epichlorohydrin-ethylene oxide-acryl glycyl ether three-dimensional copolymer, urethane rubber, acryl rubber, ethylene-propylene rubber, styrene rubber, butadiene rubber or natural rubber; as the binder, mixing it with a carbonaceous powder and molding the mixture.

However, the fuel cell separator comprising a molded material containing a carbonaceous powder and such a resin binder has a problem in that mechanical characteristics such as moldability and strength are incompatible with functions as a separator such as conductivity. That is, it is desirable to use a large amount of the binder for the purpose of improving mechanical characteristics by increasing binding degree of the carbonaceous powder, but larger amount of the binder means relatively smaller ratio of the content of the carbonaceous powder, thus reducing the conductivity. Particularly, since high fluidity is required for molding materials in the case of injection molding, it is necessary to use a large amount of the binder for satisfying this requirement, thus spoiling the conductivity as a result.

In this connection, regarding a method for mixing and kneading powder, Unexamined Published Japanese Patent Application No. 11-204120 (U.S. Patent Publication No. 20020004156) describes that a composite material for fuel cell separator molding is prepared by adding an epoxy resin and a phenol resin to methyl isobutyl ketone solvent together with graphite powder, kneading the mixture into a slurry form using a ball mill and then drying the slurry. Also, Unexamined Published Japanese Patent Application No. 2001-181519 describes that a composite material for fuel cell separator molding is prepared by mixing a thermosetting resin, graphite and polyvinyl butyral or a mixture of polyvinyl butyral and acrylonitrile butadiene rubber using a kneading machine such as Henschel mixer.

Also, Unexamined Published Japanese Patent Application No. 58-5977 describes that a graphite powder is subjected to an affinity treatment and then an alkali-resistant resin is adhered thereto, as a carbon bipolar plate of an alkali aqueous solution electrolyte type fuel cell. As examples of this affinity treatment, it describes a stearic acid treatment, a phenol resin treatment, a polyester treatment, a process oil treatment, a naphthene oil treatment, a fatty acid treatment and a water glass treatment. Also, as examples the alkali-resistant resin, it describes a polysulfone resin, a polyphenylene oxide resin, a polyallyl ether resin, a polybutadiene resin, an epoxy resin, a polyethylene resin, a polypropylene resin, a polyvinyl chloride resin, polyethylene tetrabromide resin and a polyethylene tetrabromide- polypropylene hexabromide resin.

As described in the foregoing, when a fuel cell separator is molded by mixing a carbonaceous powder with a binder such as a resin, it is difficult to satisfy moldability and mechanical properties and also required characteristics as the separator such as conductivity, and in order to solve this problem, it is necessary to improve balance of the separator performance and the binding property.

By the way, as described in the foregoing, there are highly heat-resistant resins so-called engineering plastics against general-purpose resins among binder resins. Accordingly, in order to obtain a viscous high performance fuel cell separator having high durability and strength, it was considered that when a product prepared by packing a carbonaceous powder in a high density and, while effectively using the conductive pass to the maximum, filling the porous parts with a highly heat-resistant resin can be obtained, it will be industrially advantageous because it will satisfy mechanical characteristics and functions as a separator even with a relatively small amount of the binder.

However, being highly resistant to heat, it was difficult to treat these highly heat-resistant resins for covering the surface of carbonaceous powder. That is, as the treatment for covering the surface of carbonaceous powder with a binder, mixing of the binder with the carbonaceous powder by dissolving in an organic solvent is advantageous and it renders possible high degree coating of the surface of carbonaceous powder with the binder resin, but such a method cannot be employed because high heat-resistant resins have low compatibility or substantially no compatibility with organic solvents due to their high heat resistance, high strength and high durability.

The kneading methods described in Unexamined Published Japanese Patent Application No. 11-204120 and Unexamined Published Japanese Patent Application No. 2001-181519 are not sufficient for filling voids between carbonaceous powders, and particularly in the case of highly heat-resistant, high strength and high durability resins, they are hardly conformable with the carbonaceous powder but merely present in a point contact manner and can hardly perform face contact with the carbonaceous powder by spreading on the carbonaceous powder surface. Thus, though a highly heat-resistant resin is contained, its original excellent mechanical characteristics cannot be applied so that it was difficult to obtain a fuel cell separator having both of excellent mechanical characteristics and electric characteristics.

Also, a resin treatment is included in the affinity treatment described in Unexamined Published Japanese Patent Application No. 58-5977, but there is no illustrative method of the treatment.

The invention aims at providing a composite material for fuel cell separator molding for use in the production of a fuel cell separator having both of excellent mechanical characteristics and electric characteristics and a production method thereof, and a fuel cell separator which uses the composite material and a production method thereof.

The composite material for a fuel cell separator molding use of the invention is a composite material which comprises a carbonaceous powder dispersed in a matrix, characterized in that the matrix is formed from a resin coat cover for coating the carbonaceous powder and a resin reinforcing phase having higher heat resistance than a resin forming the resin coat cover.

The method of the present invention for producing a composite material for fuel cell separator molding is a method which comprises completely compatibilyzing a first resin in an organic solvent with which the first resin can be compatibilyzed, mixing this with a carbonaceous powder to form a resin coat cover comprising the first resin on the surface of the carbonaceous powder, subsequently mixing with a second resin having low compatibility with the organic solvent or substantially no compatibility and also having higher heat resistance than the first resin and then subjecting the mixture to heating, kneading and extrusion, thereby obtaining a composite material in which the carbonaceous powder coated with the resin coat cover formed a matrix together with a resin reinforcing phase having higher heat resistance than the resin which forms the resin coat cover.

That is, the present inventors have conducted intensive studies with the aim of obtaining a fuel cell separator having both of excellent mechanical characteristics and electric characteristics by using a high heat-resistant resin having low compatibility with organic solvents as the binder and combining it with a carbonaceous powder, and found as a result that by firstly forming a resin coat cover on a carbonaceous powder with a resin completely compatibilyzed in an organic solvent and then forming a resin reinforcing phase by kneading with a resin having low compatibility with the organic solvent or substantially no compatibility, the resin coat cover exerts adhesive function between the carbonaceous powder and the resin reinforcing phase, voids between carbonaceous powders are efficiently filled with the binder, and a resin having high heat-resistance, high strength and high durability is spread in a face contacting manner on the carbonaceous powder surface, that is, since a composite material for fuel cell separator molding in which the carbonaceous powder coated with the resin coat cover forms a matrix together with the resin reinforcing phase can be obtained, the high strength and high durability inherent to the high heat-resistant resin can be sufficiently applied so that a fuel cell separator having both of excellent mechanical characteristics and electric characteristics can be obtained. The invention has been accomplished based of this finding.

In this connection, the Unexamined Published Japanese Patent Application No. 58-5977 describes that a graphite powder is subjected to an affinity treatment and then an alkali-resistant resin is adhered thereto, but it does not describe illustrative treating method and the treating methods listed as the affinity treatment are for providing surface affinity to the alkali-resistant resin through a chemical bond.

On the contrary, in the resin coat cover of the invention, it is made into a markedly thin coat cover so far as the face contact between the carbonaceous powder and resin reinforcing phase can be maintained, and voids on the carbonaceous powder surface are made into a matrix form filled with the resin reinforcing phase, thereby providing physical conformity between resins of the resin coat cover and resin reinforcing phase on the carbonaceous powder surface and obtaining electric characteristics and mechanical characteristics (strengths), so that mechanisms and obtained effects of both cases are basically different from each other and they are also different in terms of the range of resins to be used.

The fuel cell separator of the invention is obtained by heating the composite material for fuel cell separator molding of the invention or a composite material for fuel cell separator molding produced by the method of the invention and then carrying out injection molding or compression molding. Also, the method of the invention for the production of a separator for fuel cell is characterized in that the composite material for fuel cell separator molding of the invention or a composite material for fuel cell separator molding produced by the method of the invention is heated and then subjected to injection molding or compression molding, and the product has both of excellent mechanical characteristics and conductivity, preferably having a bending strength of 30 MPa or more when measured in accordance with JIS K7171, a distortion by bending rupture of 1% or more when measured in accordance with JIS K7171, a volume resistivity of 200 m$\Omega$·cm or less and a contact resistance value of 200 m$\Omega$·cm$^2$ or less.

By way of example and to make the description more clear, reference is made to the accompanying drawing in which:

Fig. 1A is an illustration schematically showing a section of a matrix formed from a carbonaceous powder coated with a resin coat cover together with a resin reinforcing phase having higher heat resistance than that of a resin which constitutes the resin coat cover, in the composite material for fuel cell separator molding use and fuel cell separator of the invention, and Fig. 1B is an enlarged view of its main part.

Fig. 2 is an illustration schematically showing a test piece for measuring contact resistance value of the fuel cell separator.

Fig. 3 is an illustration schematically showing a tester for measuring contact resistance value of the fuel cell separator, in which a test piece for measuring contact resistance value of the fuel cell separator is set.

The following describes illustrative embodiments for carrying out the present invention in detail.

Firstly, the carbonaceous powder to be used in the present invention, the resin coat cover to be formed on this carbonaceous powder, the resin reinforcing phase and the matrix of composite material are described. Carbonaceous powder:

As the carbonaceous powder, granite powder is generally used. This granite powder is not particularly limited, and its examples which can be used include natural graphite in various shapes such as a scale, a grain, a mass and a soil, artificial graphite in a shape such as a mass produced by kneading, molding, baking or graphitization of a main material such as petroleum coke or pitch cake and fibrous artificial graphite, e.g., carbon fiber such as of a PAN, rayon or pitch, woven fabric or non-woven fabric of the carbon fiber or composite material, which may be pulverized as occasion demands, as well as expanded graphite.

From the view point of properties such as conductivity and cell performance, it is desirable that the ash content in the carbonaceous powder such as graphite powder is 1% by weight or less, particularly 0.5% by weight or less. Also, it is desirable that the content of alkali metals, alkaline earth metals and transition metals is 500 ppm or less, particularly 100 ppm or less.

Also, from the view point of properties such as surface smoothness of the obtained separator and cell performance, it is desirable that volatile components in the carbonaceous powder are 2% by weight or less, particularly 1% by weight or less. Also, the fixed carbon content is preferably 98% by weight or more, particularly preferably 99% by weight or more.

From the viewpoint of properties such as separator performance, particle size (primary particle size) of the carbonaceous powder is preferably 1,000 $\mu$m or less, more preferably 500 $\mu$m or less, particularly preferably 300 $\mu$m or less, as maximum particle size. However, from the viewpoint of properties such as moldability and performance of the separator, it is desirable that fine powders (e.g., fine powders of 0.1 $\mu$m or less) are not contained, so that the average particle size is preferably from 1 to 100 $\mu$m, more preferably from 3 to 70 $\mu$m, particularly preferably from 5 to 50 $\mu$m.

In the case of a carbonaceous powder such as carbon fiber, it is desirable that the fiber diameter is generally from 1 to 50 $\mu$m, preferably from 3 to 20 $\mu$m, particularly from 4 to 15 $\mu$m. The fiber length is generally from 10 to 500 $\mu$m, preferably from 50 to 500 $\mu$m, more preferably from 100 to 500 $\mu$m. In this connection, this fiber length is average fiber length in a composite material for fuel cell separator molding. The average fiber length is measured in the following manner.

A composite material for fuel cell separator molding is sufficiently soaked in liquid nitrogen (generally about 5 minutes) and then broken with a hammer. The broken face is observed under an electron microscope with a field of about 500 $\mu$m in both length and breads, and lengths of 100 fibers within the field are observed. The arithmetic mean of the lengths of 100 fibers is calculated and used as the average fiber length.

In addition, by taking breaking and crashing of the material during the production process, which will be described later, into consideration, a larger material than this range may be used, but the length is generally about 50 mm.

Unit of the carbonaceous powder to be coated with a resin may be not only the primary particle as described in the foregoing but also an aggregate such as of secondary particles. Accordingly, the lower limit may be the lower limit of the size of primary particles and is 1 $\mu$m or more, but the upper limit is generally 500 $\mu$m or less, preferably 400 $\mu$m, particularly 300 $\mu$m or less. In case the size exceeds this upper limit value, deformation resistance of the obtained fuel cell separator when stress is added becomes low and microscopic uniformity of the matrix is apt to reduce.

Resin coat cover:

According to the invention, the resin coat cover is formed to cover generally 70% or more, preferably 80% or more, more preferably 90% or more, of the surface of carbonaceous powder (primary particle or an aggregate). Covered condition of the carbonaceous powder with a resin can be examined, e.g., by observing an SEM photograph of the thickness direction of the composite material for molding or the fuel cell separator after molding.

According to the method of the invention in which a resin for resin coat cover formation is completely compatibilyzed in an organic solvent with which the resin can be compatibilyzed and then mixed the carbonaceous powder and dried, which will be described later, 95% or more of the carbonaceous powder surface, or substantially entire carbonaceous powder surface depending of the condition, can be covered with the resin coat cover.

Larger covering ratio of the carbonaceous powder surface with the resin coat cover is desirable, because voids between carbonaceous powders can be efficiently filled with the resin reinforcing phase by increasing conformability between the carbonaceous powder and resin reinforcing phase.

The resin which constitutes the resin coat cover preferably has a grass transition temperature of 100°C or less, more preferably 90°C or less, and further more preferably 80°C or less, because of the good fluidity when melted during the process for producing a composite material for fuel cell separator molding or during the process for producing a separator and the liable adsorption on the surface of the carbonaceous powder.

Regarding the lower limit of glass transition temperature for applying to the method in which a resin is completely compatibilyzed in an organic solvent and then mixed with the carbonaceous powder and dried, it may be a temperature which can ensure compatibility with the organic solvent, and in the case of rubbers, those having about -60°C can be used. Accordingly, Tg of the resin which constitutes the resin coat cover is generally from -60°C to 100°C.

In this connection, since fuel cells are used generally at around the boiling point of water, melting point of the resin which forms the resin coat cover is preferably 50°C or more, more preferably 80°C or more, and particularly preferably 100°C or more. The upper limit of the melting point of the resin which forms the resin coat cover is about 200°C or less.

Examples of the resin which constitutes the resin coat cover include so-called general-purpose thermoplastic resins, e.g., styrene resins such as polystyrene, styreneacrylonitrile copolymer and styrene-butadiene-acrylonitrile copolymer, polyolefin resins, polyvinyl chloride resin, polyvinyl butyral resins, acryl resins, ethylene-vinyl acetate copolymer, polyvinyl acetate, polyvinylidene chloride resin, polyvinyl ether, polyvinyl alcohol and ethylene-vinyl alcohol copolymer. Also can be used are rubbers classified into so-called rubber against resin, which include natural rubber (isoprene rubber), diene rubbers such as butadiene rubber, isoprene rubber, chloroprene rubber, styrene-butadiene rubber, acrylonitrile-butadiene rubber and butyl rubber, and synthetic rubbers such as ethylene-propylene rubber, urethane rubber, fluorine rubber and silicon rubber, as well as so-called thermoplastic elastomers such as a styrene thermoplastic elastomer, a urethane thermoplastic elastomer, a polyester thermoplastic elastomer, a polyamide thermoplastic elastomer and a polyolefin thermoplastic elastomer. In addition, general-purpose thermosetting resins such as a phenol resin, a urea resin, a melamine resin, a furan resin, an unsaturated polyester resin, an epoxy resin, a diallyl phthalate resin and a ketone resin can also be used.

These resins may be used alone or as a combination of two or more.

Among these resins, it is desirable to select a general-purpose resin or rubber or a thermoplastic elastomer, because the effect as a resin coat cover can be obtained with a small amount and the mechanical strength and moldability can be improved. A styrene resin is desirable as the general-purpose thermoplastic resin, a hydrocarbon rubber such as a diene rubber or an ethylene-propylene rubber is desirable as the rubber, and a styrene thermoplastic elastomer or a polyolefin thermoplastic elastomer is desirable as the thermoplastic elastomer.

Thickness of the resin coat cover can be as thin as possible so far as the resin reinforcing phase described in the following can contact with the carbonaceous powder in a face-contacting manner via the resin coat cover, and its lower limit is generally 1 $\mu$m or more, preferably 2 $\mu$m or more. When thickness of the resin coat cover is thinner than this, resin coating cannot be carried out accurately. Also, upper limit of the resin coat cover thickness is generally 50 $\mu$m or less, preferably 30 $\mu$m or less, more preferably 10 $\mu$m or less. When thickness of the resin coat cover is thicker than this, it causes a tendency to reduce conductivity because carbonaceous powders become difficult to contact with each other and it becomes difficult to use the performance inherent to a resin which forms the resin reinforcing phase.

Lower limit of the forming ratio of the resin coat cover to the carbonaceous powder is generally 0.1 part by weight or more, preferably 1 part by weight or more, more preferably 5 parts by weight or more, based on 100 parts by weight of the carbonaceous powder. When the forming ratio of the resin coat cover is smaller than this ratio, resin coating cannot be carried out accurately. Also, upper limit of the forming ratio of the resin coat cover is generally 50 parts by weight or less, preferably 40 parts by weight or less, more preferably 30 parts by weight or less, based on 100 parts by weight of the carbonaceous powder. When the forming ratio of the resin coat cover is lager than this ratio, it causes a tendency to reduce conductivity because carbonaceous powders become difficult to contact with each other and it becomes difficult to use the performance inherent to a resin which forms the resin reinforcing phase.

Resin reinforcing phase:

The resin reinforcing phase is constituted from a resin having higher heat resistance than that of the resin coat cover-forming resin. This heat resistance can be expressed by glass transition temperature (Tg).

In order to provide the resin of resin reinforcing phase with higher heat resistance than that of the resin of resin coat cover, Tg of the resin of resin reinforcing phase should be higher than the Tg of the resin of resin coat cover, and it is desirable that the temperature is higher than generally 20°C or more, preferably 30°C or more, more preferably 50°C or more.

As the resin which constitutes the resin reinforcing phase, a resin having a lower limit glass transition temperature of 120°C or more, preferably 130°C or more, more preferably 150°C or more, particularly 180°C or more is desirable, because the obtained fuel cell separator shows high heat resistance, high strength and high durability.

On the contrary, however, when glass transition temperature of the resin which constitutes the resin reinforcing phase is too high, its boundary area with the resin coat cover in the obtained composite material becomes less conformable, porosity in the carbonaceous powder becomes high, and the resin reinforcing phase becomes difficult to spread on the carbonaceous powder surface in face-contacting manner via the obtained resin coat cover, so that it is desirable to adjust the upper limit to 350°C or less, preferably 300°C or less. Thus, glass transition temperature of the resin reinforcing phase-constituting resin is generally from 120 to 350°C.

In this connection, the upper limit of melting point of the resin reinforcing phase-constituting resin is preferably 400°C or less, more preferably 350°C or less, most preferably 300°C or less, from the viewpoint of, e.g., moldability under heating compression. Also, it is desirable that the lower limit of melting point of the resin reinforcing phase-constituting resin is generally 100°C or more, because fuel cells are generally used at around the boiling point of water and also in relation to the resin coat cover resin used.

It is desirable that the resin reinforcing phase is spread in a face-contacting manner on the resin coat cover, and this state can be observed, e.g., by an SEM photograph of the thickness direction of the composite material for molding or the fuel cell separator after molding. It is desirable that contacting ratio of the periphery of resin reinforcing phase to the resin coat cover is generally 10% or more, preferably 20% or more. Preferably, this contacting ratio is as high as possible in view of certain properties such as mechanical characteristics.

In this connection, the contacting ratio of the periphery of resin reinforcing phase to the resin coat cover is illustratively described in the item of porosity of matrix described in the following.

As the resin constituting the resin reinforcing phase, so-called engineering plastics are desirable, and their examples include unsaturated polyesters such as a polyphenylene sulfide resin, a polysulfone resin, a polyether sulfone resin, a polyallylate resin, a polyamide resin, a polycarbonate resin, a polyphenylene ether resin, polyethylene terephthalate, polybutylene terephthalate and polyethylene naphthalate, and high heat resistance thermoplastic resins such as a polyether ether ketone resin, a polyallylsulfone resin, a polyimide resin, a fluorine resin, a liquid crystal polymer, a polyamidoimide resin, a polyacetal resin and a polyphenylene oxide resin.

These resins may be used alone or as a combination of two or more.

In this connection, the resin for forming the reinforcing phase may be separately mixed with other resins, e. g., when the resin for forming the coat cover is compatibilyzed in advance or mixed in advance, or the resin coat cover-formed carbonaceous powder is kneaded, and compatibilyzed at the time of kneading, with the proviso that they have heat resistance to the glass transition temperature (Tg 120°C or more).

Lower limit of the ratio of the resin of resin reinforcing phase is generally 1 part by weight or more, preferably 5 parts by weight or more, more preferably 10 parts by weight or more, based on 100 parts by weight of the carbonaceous powder. When the ratio of the resin of resin reinforcing phase is smaller than this, mechanical strength of the obtained separator becomes difficult to be generated. Also, upper limit of the ratio of the resin of resin reinforcing phase is generally 100 parts by weight or less, preferably 90 parts by weight or less, more preferably 80 parts by weight or less, based on 100 parts by weight of the carbonaceous powder, and when the ratio is larger than this, conductivity of the obtained separator is apt to reduce.

[Matrix]

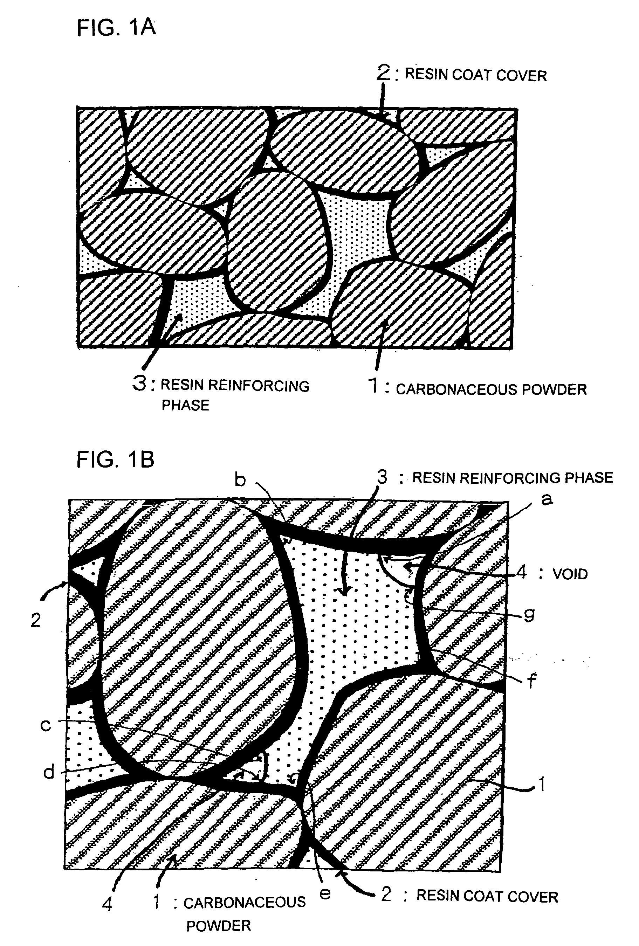

According to the composite material for fuel cell separator molding use of the invention, it is considered, as schematically shown in Fig. 1 (Fig. 1A is a schematic drawing of its section, and Fig. 1B is an enlarged view of the main part of Fig. lA), that a matrix is formed by filling voids between the resin coat cover 2-covered carbonaceous powders 1 with the resin reinforcing phase 3.

That is, in the composite material for fuel cell separator molding or the fuel cell separator after molding, a conductive pass is efficiently formed by packing the carbonaceous powder 1 together with other carbonaceous powder 1 or via the resin coat cover 2, and the resulting voids are filled with a binder of highly heat-resistant resin, or the high heat resistance resin reinforcing phase 3 is spread in a face-contacting manner on the surface of the carbonaceous powder 1 under a state in which the periphery of the carbonaceous powder which formed a resin coat cover is surrounded by the resin reinforcing phase, thereby forming a low porosity matrix.

Conditions such as of the void part 4 of this matrix can be verified by the SEM photograph.

Upper limit of the porosity of this matrix is generally 10% or less, preferably 8% or less, more preferably 7% or less. When the porosity is larger than this, mechanical strength of the obtained fuel cell separator is apt to reduce. Lower limit of the porosity may be as low as possibly, but when the porosity is approximately up to 2%, particularly up to 1%, the burden required for treatments such as kneading can be reduced and a fuel cell separator having excellent mechanical characteristics and electric characteristics can be prepared. Accordingly, porosity of the matrix is generally from 1 to 10%.

In this connection, as is described in the foregoing, it is desirable that the resin reinforcing phase 3 is spread in a face-contacting manner on the carbonaceous powder 1 which formed the resin coat cover 2, and that contacting ratio of the periphery of the resin reinforcing phase 3 to the carbonaceous powder 1 which formed the resin coat cover 2 is generally 10% or more, preferably 20% or more. For example, in the case of a composite material in which the resin reinforcing phase 3 is present between the carbonaceous powders 1 covered with the resin coat cover 2, and a matrix is formed by filling the void part 4 between the carbonaceous powders 1 with the resin reinforcing phase 3, as shown in Fig. 1B, this contacting ratio to the coat cover can be calculated from the ratio of the total length of the five curves a-b, b-c, d-e, e-f and f-g contacting with the carbonaceous powder 1 which formed the resin coat cover 2 to the total length of the seven curves a-b, b-c, c-d, d-e, e-f, f-g and g-a forming peripheral face of the resin reinforcing phase 3.

The ratio of the content of the total of the resin coat cover-forming resin to the content of the resin reinforcing phase-forming resin, which constitute the matrix, is generally 1.1 parts by weight or more, preferably 2 parts by weight or more, more preferably 5 parts by weight or more, based on 100 parts by weight of the carbonaceous powder. When the containing ratio is smaller than this, it becomes difficult to obtain mechanical strength of the obtained fuel cell separator. Upper limit of the containing ratio of the total of the resins of the resin coat cover and resin reinforcing phase is generally 150 parts by weight or less, preferably 140 parts by weight or less, more preferably 130 parts by weight or less, based on 100 parts by weight of the carbonaceous powder. When the containing ratio is larger than this, conductivity of the obtained fuel cell separator is apt to reduce.

In this connection, since the total of the resin coat cover-forming resin and the resin reinforcing phase-forming resin, which constitute the matrix, varies depending on the fuel cell separator molding method, a fuel cell separator obtained, e.g., by injection molding which requires relatively large amount of resins has a tendency to cause inferior conductivity to that of a fuel cell separator obtained by compression molding, but when the resin coat cover is formed by respective molding method, the conductivity is improved and the mechanical property is also improved.

In addition, lower limit of the ratio (weight ratio) of the content of the resin coat cover-forming resin to the content of the resin reinforcing phase-forming resin (when the ratio of the resin for reinforcing phase formation is most large) is generally 1/99 or more, preferably 9/95 or more. When the resin for reinforcing phase formation is larger than this ratio, it becomes difficult to effect face contact between the resin coat cover and resin reinforcing phase. Also, upper limit of the ratio (weight ratio) of the content of the resin coat cover-forming resin to the content of the resin reinforcing phase-forming resin (when the ratio of the resin for reinforcing phase formation is most small) is generally 30/70 or less, preferably 25/75, more preferably 20/80 or less. When the resin for reinforcing phase formation is smaller than this ratio, it becomes difficult to sufficiently generate mechanical strength by the resin reinforcing phase.

Lower limit of bulk density of such a matrix is generally 1.5 g/cc or more, preferably 1.6 g/cc or more, more preferably 1.7 g/cc or more. When bulk density of the matrix is lower than this, mechanical strength of the obtained separator is apt to reduce due to too many voids in the matrix. Upper limit of bulk density of the matrix may be as high as possibly, because it is desirable that the carbonaceous powder is packed at high packing ratio, but the density of a pure carbonaceous powder, namely around the density 2.2 g/cc of graphite, is the upper limit. Accordingly, bulk density of the matrix is generally from 1.5 to 2.2 g/cc.

The composite material of the invention for fuel cell separator molding may have any optional shape but is generally a pellet or a powder form. When the composite material of the invention for fuel cell separator molding is in a pellet form, it is desirable that it has a size having good treating ability by injection molding, which is generally a diameter of 1 mmφ or more, preferably 1.5 mmφ or more, more preferably 2 mmφ or more, and generally 10 mmφ or less, preferably 7 mmφ or less, more preferably 5 mmφ or less. Also, in the case of a powder form, it is desirable that it has a size which shows good treating ability by compression molding and can effect uniform packing in a die, and its average particle size is generally 0.05 mm or more, preferably 0.1 mm or more, more preferably 0.2 mm or more, and generally 1 mm or less, preferably 0.9 mm or less, more preferably 0.8 mm or less, its maximum particle size is generally 2 mm or less, preferably 1.5 mm or less, and its minimum particle size is generally 0.02 mm or more, preferably 0.03 mm or more.

Such a powder can be prepared by pulverizing the pellet using an optional grinder, or it may be a product of granulation.

The composite material of the invention for fuel cell separator molding may further contain a conductive material other than the resin coat cover-formed carbonaceous powder. In that case, it is desirable that the conductive material is contained in the composite for molding use at a content ratio of 30% by weight or less. Lower limit of the conductive material content ratio is about 0.1% by weight.

Though kinds of the conductive material to be contained are not particularly limited, its examples include one or two or more species selected from the group consisting of graphite, expanded graphite, carbon black, carbon fiber, vapor phase epitaxy carbon fiber, carbon nanotube, fullerene and metals. As the metals, aluminum, copper, zinc and iron or alloys thereof can be exemplified.

Shape of the conductive material has no particular limitation, and various shapes such as a scale, a granule, a mass and a fiber can be employed. When the conductive material is a powdery form, it is desirable that its particle diameter is similar to that of the carbonaceous powder, and it is desirable that a resin coat cover is also formed on this conductive material similar to the case of the carbonaceous powder, because mechanical characteristics of the separator can be further improved.

Next, production method of the composite material of the invention for fuel cell separator molding is described.

In order to produce the composite material for fuel cell separator molding in accordance with the method of the invention, a resin coat cover-forming resin (first resin) is completely compatibilyzed in an organic solvent, mixed with a carbonaceous powder to form a resin coat cover and then mixed with a high heat resistance resin (second resin) having low compatibility or substantially having no compatibility with the organic solvent, and the resulting mixture is subjected to heating, melting and kneading to obtain a resin reinforcing phase.

Compatibility of a resin with an organic solvent has a correlation to the heat resistance of the resin, and there is a tendency that the compatibility with the same organic solvent becomes low as the heat resistance becomes high. That is, when a resin having lower compatibility with the same organic solvent, in comparison with that of a resin which forms a resin coat cover, is used as a resin for forming a resin reinforcing phase, a carbonaceous powder coated with a resin coat cover can form a matrix together with a resin reinforcing phase having higher heat resistance than that of the resin which forms the resin coat cover.

The resin coat cover-forming resin, resin reinforcing phase-forming resin and carbonaceous powder are as described in the foregoing.

In this connection, the organic solvent capable of compatibilyzing with organic solvents means a solvent which shows a resin solubility of 10% or more by the following compatibility test.

Also, the term "low compatibility" in the case of a resin having low compatibility or substantially having no compatibility with the organic solvent means a resin solubility of 30% or less, and the term "substantially having no compatibility" means a resin solubility of 10% or less. Particularly, an organic solvent having a resin solubility of 10% or less can form a high heat resistance resin reinforcing phase and therefore is desirable.

[Compatibility test]

A resin cut, crushed or pulverized to a size of 5 mm or less (to be referred to as "material resin" hereinafter) is mixed with an organic solvent in five volumes by weight ratio based on the resin at room temperature (25°C) and stirred at 1,000 rpm for 2 hours, and the resulting mixture (to be referred to as "compatibilyzed product" hereinafter) is immediately collected by filtration and dried. Weight of the thus collected resin by filtration is measured and the resin solubility is calculated based on the following formula.

$$\text{Resin solubility (\%)} = \{(\text{weight of material resin} - \text{weight of collected resin})/\text{weight of material resin}\} \times 100$$

When two or more resins are mixed and used in producing the composite material of the invention for fuel cell separator molding, the compatibility test is carried out at a ratio identical to the mixing ratio of the used resins and under the same using mode, namely the compatibility test is carried out by mixing resins by a corresponding mode when two or more resins are combined by melting or kneading them, or by a corresponding mode when two or more resins are used by simply mixing them as respective pellet forms.

Also, when two or more organic solvents are used by mixing them, the compatibility test is carried out by the same mixing ratio of the used organic solvents and the same using mode.

In addition, the complete compatibility means that a mixture of the organic solvent with the resin for resin coat cover formation use shows a single phase when observed with the naked eye at the time of mixing it with a carbonaceous powder.

Examples of the organic solvent to be used in the complete compatibilyzation of resins for resin coat cover formation use include alkanes such as butane, pentane, hexane, heptane and octane; cycloalkanes such as cyclopentane, cyclohexane, cycloheptane and cyclooctane; alcohols such as ethanol, propanol, butanol, amyl alcohol, hexanol, heptanol, octanol, decanol, undecanol, diacetone alcohol, furfuryl alcohol and benzyl alcohol; cellosolves such as methyl cellosolve, ethyl cellosolve, butyl cellosolve, methyl cellosolve acetate and ethyl cellosolve acetate; propylene glycols such as propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate and dipropylene glycol dimethyl ether; ketones such as acetone, methyl ethyl ketone, cyclohexanone and acetophenone; ethers such as dioxane and tetrahydrofuran; esters such as butyl acetate, amyl acetate, ethyl butyrate, butyl butyrate, diethyl oxalate, ethyl pyruvate, ethyl-2-hydeoxy butyrate, ethyl acetoacetate, methyl lactate, ethyl lactate and methyl 3-methoxypropionate; halogenated hydrocarbons such as chloroform, methylene chloride and tetrachloroethane; aromatic hydrocarbons such as benzene, toluene, xylene, cresol, amylbenzene, pyridine, aniline and phenol; and high polar solvents such as dimethylformamide, dimethylacetamide and N-methylpyrrolidone; of which aromatic hydrocarbons are preferred.

Lower limit of the using amount of these organic solvents is generally 0.5 part by weight or more, preferably 1 part by weight or more, more preferably 1.5 parts by weight or more, based on 1 part by weight of the resin for resin coat cover forming use. When the amount is smaller than this, coating with the resin coat cover cannot be carried out sufficiently and it takes much time for recovering the solvent, which are un-efficient. Upper limit of the using amount of organic solvents is generally 10 parts by weight or less, preferably 5 parts by weight or less, based on 1 part by weight of the resin for resin coat cover forming use. When the amount is larger than this, the resin cannot be spread sufficiently on the carbonaceous powder surface.

Mixing of the carbonaceous powder with the organic solvent completely compatibilyzed with the resin for resin coat cover forming use can be carried out by a simple mixing or flushing of the resin for resin coat cover forming use completely compatibilyzed in the organic solvent. Illustratively, a method for uniformly mixing them using a mixer such as tumbler blender, ribbon blender, V type blender, Henschel mixer or super mixer, or a method for mixing and kneading them using a kneading machine such as single or twin screw extruder, roll, Banbury mixer, kneader or Brabender, can be employed. In this connection, the carbonaceous powder may be wetted in advance with the used organic solvent.

Mixing ratio of the carbonaceous powder to the organic solvent completely compatibilyzed with the resin for resin coat cover forming use may be optionally selected such that ratio of the resin for resin coat cover forming use to the carbonaceous powder becomes the range described in the foregoing. Regarding the temperature condition during this mixing, it may be within a range which can effect uniform mixing, or under heating as occasion demands. It is desirable to carry out the mixing generally at room temperature (25°C) or more, preferably at 30°C or more, and 80°C or less, preferably 60°C or less.

Regarding stirring at the time of mixing, revolution speed and time are selected such that uniform mixing can be effected. The mixing time is generally from 1 minute to 10 hours, preferably from several minutes to several hours.

When they become a state of paste by the mixing, it is optionally dried under heating. As the heating conditions, it is desirable to select a temperature and a period by which the organic solvent evaporates. Illustratively, the heating temperature is set to 200°C or less, the heating time is set to a period of from several minutes to scores of hours, and the drying is carried out until the organic solvent content becomes preferably 1% by weight or less.

The carbonaceous powder which formed the resin coat cover in this manner is mixed with the resin for resin reinforcing phase forming use and heated, or heated and mixed to obtain a mixed melting state and uniformly mixed using a mixer such as tumbler blender, ribbon blender, V type blender, Henschel mixer or super mixer, or mixed, kneaded and extruded using a kneading machine such as single or twin screw extruder, roll, Banbury mixer, kneader or Brabender to obtain pellets which further pulverized as occasion demands.

When the resin for resin reinforcing phase forming use is mixed with the carbonaceous powder which formed the resin coat cover, the shape of both cases is generally a powdery form, and the lower limit of its average particle size is generally 10 μm or more. When the average particle size is smaller than this, the powder rise in the air at the time of mixing or bridge in the hopper to obstruct smooth supply of the powder. Regarding the upper limit of average particle size, quick kneading can be carried out when made into a pellet of generally 5 mm or less, preferably 2 mm, and more preferably when pulverized into 1 mm or less (powdery). In carrying out the kneading, the organic solvent may be further added as occasion demands.

The kneading conditions have no particular limitation, and temperature and time may be optionally selected so that kneading can be carried out smoothly, e.g., in the following manner.

Lower limit of the kneading temperature is generally 50°C or more higher temperature than the melting point of the used resin for resin reinforcing phase, preferably 100°C or more higher temperature. When the temperature is lower than this, quick flow cannot be effected sufficiently and close contact between the resin coat cover and resin reinforcing phase cannot be made sufficiently. Though upper limit of the kneading temperature cannot be defined sweepingly depending on the kinds of resins, too high temperature causes deterioration of the used resins, so that it is set to a level less than the temperature which does not cause the deterioration, that is, generally 450°C or less, preferably 400°C or less.

Though the kneading time cannot be defined sweepingly depending on the kneading machine to be used, it is generally from 1 minute to 10 hours, preferably from several minutes to several hours.

When a conductive material is contained in the thus obtained composite material for fuel cell separator molding, the conductive material is contained in the composite material for molding use by adding it to one or more cases selected from the following (1) to (5).

(1) the carbonaceous powder
(2) the resin for forming the resin coat cover, which is completely compatibilyzed with the organic solvent
(3) at the time of mixing the resin for resin coat cover forming use completely compatibilyzed with the organic solvent with the carbonaceous powder and/or a mixture thereof
(4) the resin for forming the resin reinforcing phase
(5) at the time of mixing the resin coat cover-formed carbonaceous powder with the resin for forming the resin reinforcing phase and/or to a mixture thereof

In this connection, the composite material of the invention for fuel cell separator molding is produced preferably by the method of the invention for producing a composite material for fuel cell separator molding, but not limited to this method and it may be produced by another method.

Next, the fuel cell separator of the invention and production method thereof are described.

The fuel cell separator of the invention is produced by heat-melting and molding the composite material of the invention for fuel cell separator molding or a composite material for fuel cell separator molding produced by the method of the invention for producing a composite material for fuel cell separator molding. This molding may be any molding method which includes not only compression molding but also injection molding and injection compression molding.

Though dimension and shape of the fuel cell separator of the invention are not particularly limited, a flat separator having each of lengthwise and breadthwise lengths of from 50 to 1,000 mm, particularly from 80 to 500 mm, and a thickness of from 0.5 to several 10 mm, particularly from 1 to 10 mm, can be cited.

When a large number of linear protruding rows are formed in parallel on the die surface in carrying out this molding, channels for reaction gas flow corresponding to the linear protruding rows can be formed on one side or both sides of the molded flat separator.

Upper limit of the volume resistivity of such a fuel cell separator of the invention is generally 200 m$\Omega$·cm or less, preferably 150 m$\Omega$·cm or less, more preferably 100 m$\Omega$·cm or less. The volume resistivity is desirably as low as possible but is generally several m$\Omega$·cm or more.

Upper limit of the contact resistance value of the fuel cell separator of the invention is generally 200 m$\Omega$·cm$^2$ or less, preferably 150 m$\Omega$·cm$^2$ or less, more preferably 100 m$\Omega$·cm$^2$ or less. The contact resistance value is also desirably as low as possible but is generally several m$\Omega$·cm2 or more.

In addition, the composite material of the invention for fuel cell separator molding satisfies the following mechanical characteristics (1) and (2).

(1) Bending strength of the separator measured in accordance with JIS K7171 is generally 30 MPa or more, preferably 40 MPa or more. It is desirable that this bending strength is as strong as possible, but the practically obtainable value is up to about 100 MPa.
(2) Distortion by bending rupture of the separator measured in accordance with JIS K7171 is generally 1% or more, preferably 1.5% or more, more preferably 2% or more. It is desirable that this distortion by bending rupture is as large as possible, but when its balance with electric characteristics is taken into consideration, its upper limit is practically about 5%.

The invention is described more illustratively in the following with reference to examples, but the invention is not restricted by the following examples without overstepping its gist.

Example 1

A 2,000 g portion of natural graphite powder (average particle size 30 $\mu$m) was mixed with 500 cc of toluene to wet the graphite powder, a solution prepared by dissolving 160 g of polystyrene in 500 cc of toluene was added to the wetted graphite powder, and the mixture was kneaded for 1 hour using a two-arm kneader and then dried by heating at 110°C for 5 hours. This kneaded material was put into a high speed mixer together with 64 g of carbon black (Ketchen Black EC (DBP oil absorption 360 cm$^3$/100 g, surface area (BET) 800 m$^2$/g, volatile matter 0.5%, pH 9.0, ash content 0.05)), 286 g of polyphenylene ether, 667 g of a styrene thermoplastic elastomer which is a hydrogenated derivative of a styrene-butadiene block copolymer (styrene content about 30% by weight) and 500 cc of toluene, and the contents were mixed for 4 minutes and then kneaded using a two screw extruder set at 280°C. Subsequently, the kneaded sample was crudely pulverized to a maximum particle size of 1 mm or less using a mixer to obtain a composite material for fuel separator molding. A 100 g portion of the composite material was weighed and packed in a press die for 100 x 100 mm sheet use. This was press-molded for 5 minutes at a temperature of 270°C and under a pressure of 98 MPa, spontaneously cooled to 40°C and then depressurized, thereby producing a separator for a flat fuel cell use having a length, in both length wise and breadthwise, of 100 mm and a thickness of 5 mm.

The thus obtained composite material for fuel separator molding had a matrix porosity of about 1%, a resin coat cover thickness of about 7 $\mu$m, and a contacting ratio of the resin reinforcing phase periphery to the carbonaceous powder coated with the resin coat cover was about 80%.

Regarding the thus obtained separator, the surface condition when measured with the naked eye was smooth without particular irregularity, and its bulk density was 1.62 g/cc. In addition, volume resistivity of a flat test piece having a length, in both length wise and breadthwise, of 100 mm and a thickness of 5 mm was measured using a four-terminal system resistance tester ("Loresta MP" mfd. by Mitsubishi Kagaku). The volume resistivity was 293 m$\Omega\cdot$cm as an average value of five points.

Next, in accordance with JIS K7171, a test piece having a length of 100 mm, a breadth of 10 mm and a thickness of 5 mm was cut out from the separator, and bending strength and distortion by bending rupture of the test piece were measured by applying a load of an indentator to the separator face at a supporting point distance of 80 mm and a test speed of 5 mm/min. When an average value of five points was used as the measured value, the bending strength was 30 MPa and the distortion by bending rupture was 1.2 mm (3.0%).

Example 2

A 550 g portion of a PAN carbon fiber (mfd. by Mitsubishi Rayon; fiber diameter 7.5 $\mu$m, fiber length 1 cm) was used as the carbonaceous powder and mixed with 250 cc of toluene to wet the carbon fiber, a mixture consisting of 3.8 g of the same carbon black of Example 1, 7.7 g of a vapor phase epitaxy carbon fiber (both conductive materials) and a solution prepared by dissolving 38.5 g of polystyrene in 250 cc of toluene was added to the wetted carbon fiber, and the mixture was kneaded at 40°C for 1 hour using a two-arm kneader and then dried by heating at 100°C for 3 hours. This kneaded material was mixed with 30.8 g of carbon black, 61.5 g of vapor phase epitaxy carbon fiber and 307.7 g of polyphenylene sulfide, and the mixture was melt-kneaded using a two screw extruder set at 300°C. Subsequently, the kneaded sample was crudely pulverized to a maximum particle size of 6 mm or less using a cutting mill to obtain a composite material for fuel separator molding. This composite material was molded for an injection period of 0.82 second using an injection molding machine set at a die temperature of 100°C and a cylinder temperature of 350°C, thereby producing a separator for a flat fuel cell use having a length, in both length wise and breadthwise, of 100 mm and a thickness of 2 mm.

The thus obtained composite material for fuel separator molding had a matrix porosity of about 3%, a resin coat cover thickness of about 5 $\mu$m, and a contacting ratio of the resin reinforcing phase periphery to the carbonaceous powder coated with the resin coat cover was about 50%. The average fiber length of said carbonaceous fiber in the composite material for fuel cell separator molding was 254 $\mu$m.

Regarding the thus obtained separator, the surface condition when measured with the naked eye was smooth without particular irregularity, and its bulk density was 1.65 g/cc. When the volume resistivity was measured in the same manner as in Example 1 except that the thickness was changed to 2 mm, its 5 point average value was 22 m$\Omega\cdot$cm.

Next, the bending strength and distortion by bending rupture were measured in the same manner as in Example 1, except that size of the test piece was changed to a length of 40 mm, a breadth of 40 mm and a thickness of 2 mm, and the supporting point distance was changed to 34 mm. The bending strength was 83 MPa and the distortion by bending rupture was 0.29 mm (1.71%).

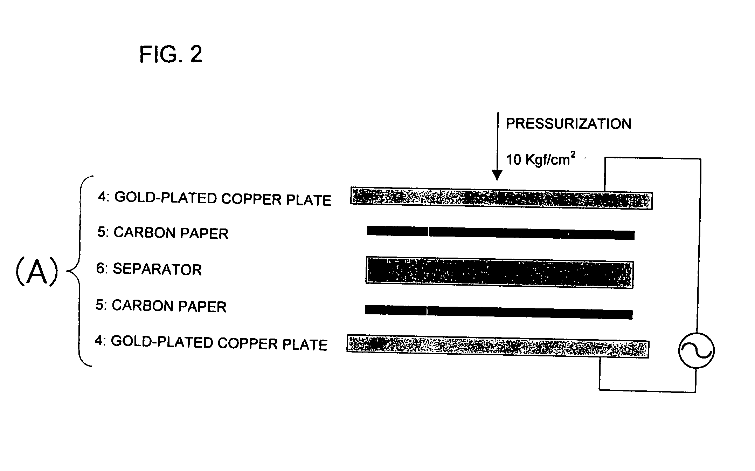

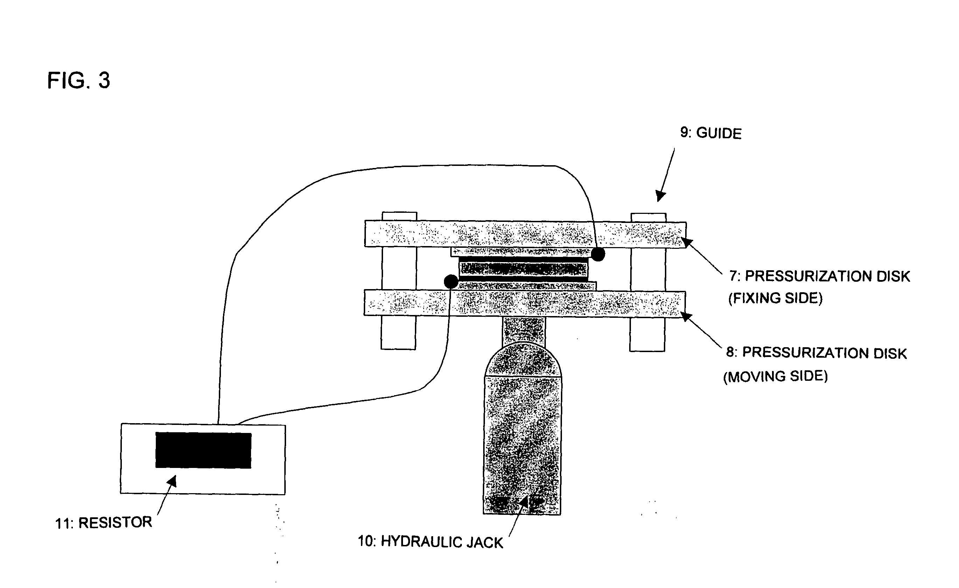

Also, the contact resistance value was 151 m$\Omega\cdot$cm$^2$. Measuring method of the contact resistance value is described in the following. Firstly, as shown in Fig. 2, both sides of a flat separator plate having a length, in both length wise and breadthwise, of 100 mm and a thickness of 2 mm were covered with sheets of carbon paper having a size of 100 x 100 mm and further covered with gold-plated copper plates of 140 x 140 mm in size. This is to be called test piece (A). As shown in Fig. 3, the test piece (A) was put on the center of a pressurization disk (moving side) of a contact resistance tester, and the pressurization disk (moving side) was lifted along the guide by operating a hydraulic jack to carry out compression until entire face of the test piece (A) contacted with the pressurization disk (fixing side) and a bearing of 10 Kgf/cm$^2$ was applied thereto. In this connection, an insulation treatment is applied to the surface of the pressurization disk. Measuring termini of the resistor were connected respectively to the gold-plated copper plates upside and down side of the test Piece (A), and the value of resistance was measured using "HIOKI 3560 AC Milliohm High Tester" manufactured by Hioki Denki. The value of resistance per 1 cm$^2$ was calculated, and using this value as a contact resistance value (mΩ·cm$^2$), an average value of five points was used as the measured value.

Comparative Example 1

A 550 g portion of a PAN carbon fiber was used as the carbonaceous powder and mixed with 346.2 g of polyphenylene sulfide and 34.6 g of carbon black and 69.2 g of a vapor phase epitaxy carbon fiber both as conductive materials, and the mixture was then melt-kneaded using a two screw extruder set at 300°C. Subsequently, the kneaded sample was crudely pulverized to a maximum particle size of 6 mm or less using a cutting mill to obtain a composite material for fuel separator molding. This composite material was molded for an injection period of 0.85 second using an injection molding machine set at a die temperature of 100°C and a cylinder temperature of 350°C, thereby producing a separator for a flat fuel cell use having a length, in both length wise and breadthwise, of 100 mm and a thickness of 2 mm.

The thus obtained composite material for fuel separator molding had a matrix porosity of about 1%, and a contacting ratio of the resin reinforcing phase periphery to the carbonaceous powder was about 5%. Also, average fiber length of carbon fibers in the composite material for fuel separator molding was 167 μm.

Regarding the thus obtained separator, the surface condition when measured with the naked eye was smooth without particular irregularity, and its bulk density was 1.73 g/cc. When the volume resistivity was measured in the same manner as in Example 2, its 5 point average value was 24 mΩ·cm.

Next, the bending strength and distortion by bending rupture were measured in the same manner as in Example 1, except that size of the test piece was changed to a length of 40 mm, a breadth of 40 mm and a thickness of 2 mm, and the supporting point distance was changed to 34 mm. The bending strength was 70 MPa and the distortion by bending rupture was 0.18 mm (1.06%).

Also, when the contact resistance value was measured in the same manner as in Example 2, it was 180 mΩ·cm$^2$.

Example 3

A composite material for fuel separator molding was obtained in the same manner as in Example 2, except that natural graphite (average particle size 13 μm) was used as the carbonaceous powder. This composite material was molded for an injection period of 0.94 second using an injection molding machine set at a die temperature of 100°C and a cylinder temperature of 350°C, thereby producing a separator for a flat fuel cell use having a length, in both length wise and breadthwise, of 100 mm and a thickness of 2 mm.

The thus obtained composite material for fuel separator molding had almost no matrix voids and had a resin coat cover thickness of about 30 μm, and a contacting ratio of the resin reinforcing phase periphery to the carbonaceous powder coated with the resin coat cover was about 60%.

Regarding the thus obtained separator, the surface condition when measured with the naked eye was smooth without particular irregularity, and its bulk density was 1.96 g/cc. When the volume resistivity was measured in the same manner as in Example 1 except that the thickness was changed to 2 mm, its 5 point average value was 41 mΩ·cm.

Next, the bending strength and distortion by bending rupture were measured in the same manner as in Example 1, except that size of the test piece was changed to a length of 40 mm, a breadth of 40 mm and a thickness of 2 mm, and the supporting point distance was changed to 34 mm. The bending strength was 48 MPa and the distortion by bending rupture was 0.08 mm (0.47%).

Also, when the contact resistance value was measured in the same manner as in Example 2, it was 175 mΩ·cm$^2$.

Comparative Example 2

A composite material for fuel separator molding was obtained in the same manner as in Comparative Example 1, except that natural graphite (average particle size 13 μm) was used as the carbonaceous powder. This composite material was molded for an injection period of 0.90 second using an injection molding machine set at a die temperature of 100°C and a cylinder temperature of 350°C, thereby producing a separator for a flat fuel cell use having a length, in both length wise and breadthwise, of 100 mm and a thickness of 2 mm.

The thus obtained composite material for fuel separator molding had a matrix porosity of about 4%, and a contacting ratio of the resin reinforcing phase periphery to the carbonaceous powder was about 30%.

Regarding the thus obtained separator, the surface condition when measured with the naked eye was smooth without particular irregularity, and its bulk density was 1.90 g/cc. When the volume resistivity was measured in the same manner as in Example 1 except that the thickness was changed to 2 mm, its 5 point average value was 49 mΩ·cm.

Next, the bending strength and distortion by bending rupture were measured in the same manner as in Example 1, except that size of the test piece was changed to a length of 40 mm, a breadth of 40 mm and a thickness of 2 mm, and the supporting point distance was changed to 34 mm. The bending strength was 46 MPa and the distortion by bending rupture was 0.07 mm (0.41%).

Also, when the contact resistance value was measured in the same manner as in Example 2, it was 223 mΩ·cm$^2$.

As shown in Table 1, it is evident from Example 2 and Comparative Example 1 and from Example 3 and Comparative Example 2 that volume resistivity and contact resistance value were reduced and the conductivity of separators was improved by forming a resin coat cover on a carbonaceous powder. In addition, since bending strength and distortion by bending rupture became large, it can be said that mechanical characteristics were also improved.

Table 1

|  |  | Ex. 2 | Comp. Ex. 1 | Ex. 3 | Comp. Ex. 2 |
|---|---|---|---|---|---|
| Carbonaceous powder (parts by weight) | Carbon fiber | 55 | 55 | - | - |
|  | Natural graphite | - | - | 55 | 55 |
| Resin coat cover + conductive material (part by weight) |  | 5 | 0 | 5 | 0 |
| Resin reinforcing phase + conductive material (parts by weight) |  | 40 | 45 | 40 | 45 |
| Porosity (%) |  | ca. 3 | ca. 1 | ca.0 | ca. 4 |
| Thickness of resin coat cover (μm) |  | ca. 5 | - | ca 30 | - |
| Contacting ratio (%) |  | ca. 50 | ca. 5 | ca. 60 | ca. 30 |
| Bulk density (g/cc) |  | 1.65 | 1.73 | 1.96 | 1.90 |
| Volume resistivity (mΩ·cm) |  | 22 | 24 | 41 | 49 |
| Contact resistance value (mΩ·cm$^2$) |  | 151 | 180 | 175 | 223 |
| Bending strength (MPa) |  | 83 | 70 | 48 | 46 |
| Distortion by bending rupture (%) |  | 1.71 | 1.06 | 0.47 | 0.41 |

Example 4

A 900 g portion of natural graphite powder (average particle size 13 μm) was mixed with 250 cc of toluene to wet the graphite powder, a solution prepared by dissolving 50 g of polystyrene in 250 cc of toluene was added to the wetted graphite powder, and the mixture was kneaded at 40°C for 1 hour using a two-arm kneader and then dried by heating at 100°C for 3 hours. This kneaded material was mixed with 50 g of polyphenylene sulfide and then kneaded using a two screw extruder set at 300°C. Subsequently, the kneaded sample was crudely pulverized to a maximum particle size of 1 mm or less using a mixer to obtain a composite material for fuel separator molding. A 100 g portion of the composite material was weighed and packed in a press die for 100 x 100 mm sheet use. This was press-molded for 5 minutes at a temperature of 300°C and under a pressure of 98 MPa, spontaneously cooled to 40°C and then depressurized, thereby producing a separator for a flat fuel cell use having a length, in both length wise and breadthwise, of 100 mm and a thickness of 5 mm.

The thus obtained composite material for fuel separator molding had a matrix porosity of about 1% and a resin coat cover thickness of about 10 μm, and a contacting ratio of the resin reinforcing phase periphery to the carbonaceous powder coated with the resin coat cover was about 90%.

Regarding the thus obtained separator, the surface condition when measured with the naked eye was smooth without particular irregularity, and its bulk density was 2.08 g/cc.

In addition, when the volume resistivity, bending strength and distortion by bending rupture were measured in the same manner as in Example 1, they were 8 mΩ·cm, 67 MPa and 0.78 mm (1.95%), respectively.

Comparative Example 3

A 900 g portion of natural graphite (average particle size 13 μm) was mixed with 100 g of polyphenylene sulfide and then kneaded using a two screw extruder set at 300°C. Subsequently, the kneaded sample was crudely pulverized to a maximum particle size of 1 mm or less using a mixer to obtain a composite material for fuel separator molding. A 100 g portion of the composite material was weighed and packed in a press die for 100 x 100 mm sheet use. This was press-molded for 5 minutes at a temperature of 300°C and under a pressure of 98 MPa, spontaneously cooled to 40°C and then depressurized, thereby producing a separator for a flat fuel cell use having a length, in both length wise and breadthwise, of 100 mm and a thickness of 5 mm.

The thus obtained composite material for fuel separator molding had a matrix porosity of about 1%, and a contacting ratio of the resin reinforcing phase periphery to the carbonaceous powder was about 80%.

Regarding the thus obtained separator, the surface condition when measured with the naked eye was smooth without particular irregularity, and its bulk density was 2.09 g/cc.

In addition, when the volume resistivity, bending strength and distortion by bending rupture were measured in the same manner as in Example 1, they were 9 mΩ·cm, 60 MPa and 0.64 mm (1.60%), respectively.

As shown in Table 2, it is evident from Example 4 and Comparative Example 3 that volume resistivity was reduced and the conductivity of separator was improved by forming a resin coat cover on the carbonaceous powder. In addition, since bending strength and distortion by bending rupture became large, it can be said that mechanical characteristics were also improved.

Table 2

| | Ex. 4 | Comp. Ex. 3 |
|---|---|---|
| Carbonaceous powder (natural graphite) (parts by weight) | 90 | 90 |
| Resin coat cover (part by weight) | 5 | 0 |
| Resin reinforcing phase (parts by weight) | 5 | 10 |
| Porosity (%) | ca. 1 | ca. 1 |
| Thickness of resin coat cover (μm) | ca. 10 | - |
| Contacting ratio (%) | ca. 90 | ca. 80 |
| Bulk density (g/cc) | 2.08 | 2.09 |
| Volume resistivity (mΩ·cm) | 8 | 9 |
| Bending strength (MPa) | 67 | 60 |
| Distortion be bending rupture (%) | 1.95 | 1.60 |

As has been illustratively described in the foregoing, according to the invention, a fuel cell separator having both of excellent mechanical characteristics and electric characteristics can be produced.

While the invention has been described in detail and with reference to specific embodiments thereof, it will be apparent to one skilled in the art that various changes and modifications can be made therein without departing from the scope thereof.

This application is based on Japanese patent application No. 2001-394448 filed December 26, 2001, the entire contents thereof being hereby incorporated by reference.

**Claims**

1. A composite material for fuel cell separator molding, which comprises a carbonaceous powder dispersed in a matrix, wherein said matrix comprises a resin coat cover for coating said carbonaceous powder and a resin reinforcing phase having higher heat resistance than a resin which forms said resin coat cover.

2. The composite material for fuel cell separator molding according to claim 1, wherein the porosity of said matrix is 10% or less.

3. The composite material for fuel cell separator molding according to claim 1 or 2, wherein the average particle size of said carbonaceous powder is within the range of from 1 to 100 μm.

4. The composite material for fuel cell separator molding according to claim 1 or 2, wherein the average fiber length of said carbonaceous powder is within the range of from 10 to 500 μm.

5. The composite material for fuel cell separator molding according to any one of claims 1 to 4, wherein the thickness of said resin coat cover is within the range of from 1 to 50 μm.

6. The composite material for fuel cell separator molding according to any one of claims 1 to 5, wherein the contacting ratio of the periphery of said resin reinforcing phase to the carbonaceous powder coated with said resin coat cover is 10% or more.

7. The composite material for fuel cell separator molding according to any one of claims 1 to 6, wherein the total content of resins which form said resin coat cover and resin reinforcing phase is within the range of from 1.1 to 150 parts by weight based on 100 parts by weight of the carbonaceous powder.

8. The composite material for fuel cell separator molding according to any one of claims 1 to 7, wherein the content of the resin which forms said resin coat cover is within the range of from 0.1 to 50 parts by weight based on 100 parts by weight of the carbonaceous powder.

9. The composite material for fuel cell separator molding according to any one of claims 1 to 8, wherein the content of the resin which forms said resin reinforcing phase is within the range of from 1 to 100 parts by weight based on 100 parts by weight of the carbonaceous powder.

10. The composite material for fuel cell separator molding according to any one of claims 1 to 9, wherein the ratio (weight ratio) of the content of the resin which forms said resin coat cover to the content of the resin which forms said resin reinforcing phase is within the range of from 1/99 to 30/70.

11. The composite material for fuel cell separator molding according to any one of claims 1 to 10, wherein the bulk density of said composite material is 1.5 g/cc or more.

12. The composite material for fuel cell separator molding according to any one of claims 1 to 11, wherein the resin which forms said resin coat cover is a thermoplastic resin.

13. The composite material for fuel cell separator molding according to any one of claims 1 to 12, wherein glass transition temperature of the resin which forms said resin coat cover is 100°C or less.

14. The composite material for fuel cell separator molding according to any one of claims 1 to 13, wherein the resin which forms said resin reinforcing phase is a thermoplastic resin.

15. The composite material for fuel cell separator molding according to any one of claims 1 to 14, wherein glass transition temperature of the resin which forms said resin reinforcing phase is 120°C or more.

16. The composite material for fuel cell separator molding according to any one of claims 1 to 15, wherein said composite material further comprises a conductive material other than said carbonaceous powder.

17. The composite material for fuel cell separator molding according to claim 16, wherein the content of said conductive material is 30% by weight or less based on the total weight of the composite material.

18. The composite material for fuel cell separator molding according to claim 16 or 17, wherein said conductive material is one or two or more species selected from the group consisting of graphite, expanded graphite, carbon black, carbon fiber, vapor phase epitaxy carbon fiber, carbon nanotube, fullerene and metals.

19. The composite material for fuel cell separator molding according to any one of claims 16 to 18, wherein said conductive material is contained in the resin coat cover and/or resin reinforcing phase.

20. The composite material for fuel cell separator molding according to any one of claims 16 to 19, wherein said conductive material is prepared by coating a powdery conductive material with the resin coat cover.

21. The composite material for fuel cell separator molding according to any one of claims 1 to 20, wherein said composite material is in a pellet form.

22. The composite material for fuel cell separator molding according to any one of claims 1 to 20, wherein said composite material is in a powdery form.

23. A separator for fuel cell, which is produced by heating the composite material for fuel cell separator molding described in any one of claims 1 to 22 and then carrying out injection molding of the resulting material.

24. A separator for fuel cell, which is produced by heating the composite material for fuel cell separator molding described in any one of claims 1 to 22 and then carrying out compression molding of the resulting material.

25. The separator for fuel cell according to claim 23 or 24, wherein the volume resistivity is 200 m$\Omega$·cm or less.

26. The separator for fuel cell according to any one of claims 23 to 25, wherein the contact resistance value is 200 m$\Omega$·cm$^2$ or less.

27. The separator for-fuel cell according to any one of claims 23 to 26, wherein bending strength of the separator measured in accordance with JIS K7171 is 30 MPa or more.

28. The separator for fuel cell according to any one of claims 23 to 27, wherein distortion by bending rupture of the separator measured in accordance with JIS K7171 is 1% or more.

29. A method for producing a composite material for fuel cell separator molding, which comprises completely compatibilyzing a first resin in an organic solvent with which said first resin can be compatibilyzed, mixing this with a carbonaceous powder to form a resin coat cover comprising said first resin on the surface of said carbonaceous powder, subsequently mixing with a second resin having low compatibility with the organic solvent or substantially no compatibility and also having higher heat resistance than the first resin and then subjecting the mixture to heating, kneading and extrusion, thereby obtaining a composite material in which the carbonaceous powder coated with the resin coat cover formed a matrix together with a resin reinforcing phase having higher heat resistance than the resin which forms said resin coat cover.

30. The method for producing a composite material for fuel cell separator molding according to claim 29, wherein said organic solvent is one or two or more species selected from the group consisting of alkanes, cycloalkanes, alcohols, cellosolves, propylene glycols, ketones, ethers, esters, halogenated hydrocarbons, aromatic hydrocarbons and high polar solvents.

31. The method for producing a composite material for fuel cell separator molding according to claim 29 or 30, wherein glass transition temperature of said first resin is 100°C or less.

32. The method for producing a composite material for fuel cell separator molding according to any one of claims 29 to 31, wherein solubility of said second resin in the organic solvent is 30% or less.

33. The method for producing a composite material for fuel cell separator molding according to any one of claims 29 to 32, wherein average particle size of said carbonaceous powder is within the range of from 1 to 100 $\mu$m.

34. The method for producing a composite material for fuel cell separator molding according to any one of claims 29 to 33, wherein glass transition temperature of said second resin is 120°C or more.

35. The method for producing a composite material for fuel cell separator molding according to any one of claims 29 to 34, wherein said second resin is one or two or more species selected from the group consisting of polyphenylene sulfide, polysulfone, polyether sulfone, polyallylate, polyamide, polycarbonate, polyphenylene ether, polyethylene terephthalate, polybutylene terephthalate, polyether ether ketone, polyallylsulfone, polyimide, polyamidoimide, polyethylene naphthalate, fluorine-base resins and liquid crystal polymers.

36. The method for producing a composite material for fuel cell separator molding according to any one of claims 29 to 35, wherein a conductive material other than the carbonaceous powder is contained in the obtained composite material.

**37.** The method for producing a composite material for fuel cell separator molding according to claim 36, wherein said conductive material is contained in the composite material by adding it to one or more cases selected from the following (1) to (5);

> (1) the carbonaceous powder,
> (2) the first resin completely compatibilyzed with the organic solvent,
> (3) at the time of mixing the first resin completely compatibilyzed with the organic solvent with the carbonaceous powder and/or a mixture thereof,
> (4) the second resin, and
> (5) at the time of mixing the resin coat cover-formed carbonaceous powder with the second resin and/or a mixture thereof.

**38.** The method for producing a composite material for fuel cell separator molding according to claim 36 or 37, wherein 30% by weight or less of said conductive material is contained in the obtained composite material.

**39.** The method for producing a composite material for fuel cell separator molding according to any one of claims 36 to 38, wherein said conductive material is one or two or more species selected from the group consisting of graphite, expanded graphite, carbon black, carbon fiber, vapor phase epitaxy carbon fiber, carbon nanotube, fullerene and metals.

**40.** The method for producing a composite material for fuel cell separator molding according to any one of claims 36 to 39, wherein said conductive material is prepared by coating a powdery conductive material with the resin coat cover.

**41.** The method for producing a composite material for fuel cell separator molding according to any one of claims 29 to 40, wherein the extrusion is twin screw extrusion.

**42.** The method for producing a composite material for fuel cell separator molding according to any one of claims 29 to 41, wherein the extruded product is in a pellet form.

**43.** The method for producing a composite material for fuel cell separator molding according to any one of claims 29 to 41, wherein the extruded product is made into a powdery form by a pulverization treatment.

**44.** A separator for fuel cell, which is produced by heating a composite material for fuel cell separator molding produced by the production method of a composite material for fuel cell separator molding described in any one of claims 29 to 43, and then carrying out injection molding of the resulting material.

**45.** A separator for fuel cell, which is produced by heating a composite material for fuel cell separator molding produced by the production method of a composite material for fuel cell separator molding described in any one of claims 29 to 43, and then carrying out compression molding of the resulting material.

**46.** A separator for fuel cell, which has a bending strength of 30 MPa or more when measured in accordance with JIS K7171, a distortion by bending rupture of 1% or more when measured in accordance with JIS K7171, and a volume resistivity of 200 m$\Omega$·cm or less.

**47.** A separator for fuel cell, which has a bending strength of 30 MPa or more when measured in accordance with JIS K7171, a distortion by bending rupture of 1% or more when measured in accordance with JIS K7171, a volume resistivity of 200 m$\Omega$·cm or less and a contact resistance value of 200 m$\Omega$·cm$^2$ or less.

**48.** A method for producing a separator for fuel cell, which comprises heating the composite material for fuel cell separator molding described in any one of claims 1 to 22, and then carrying out injection molding of the resulting material.

**49.** A method for producing a separator for fuel cell, which comprises heating the composite material for fuel cell separator molding described in any one of claims 1 to 22, and then carrying out compression molding of the resulting material.

**50.** A method for producing a separator for fuel cell, which comprises heating a composite material for fuel cell separator molding produced by the production method of a composite material for fuel cell separator molding described in any one of claims 29 to 43, and then carrying out injection molding of the resulting material.

**51.** A method for producing a separator for fuel cell, which comprises heating a composite material for fuel cell separator molding produced by the production method of a composite material for fuel cell separator molding described in any one of claims 29 to 43, and then carrying out compression molding of the resulting material.

## FIG. 1A

2 : RESIN COAT COVER

3 : RESIN REINFORCING PHASE

1 : CARBONACEOUS POWDER

## FIG. 1B

3 : RESIN REINFORCING PHASE

4 : VOID

2 : RESIN COAT COVER

1 : CARBONACEOUS POWDER

## FIG. 2

PRESSURIZATION

10 Kgf/cm$^2$

(A)
4: GOLD-PLATED COPPER PLATE

5: CARBON PAPER

6: SEPARATOR

5: CARBON PAPER

4: GOLD-PLATED COPPER PLATE

FIG. 3

9: GUIDE

7: PRESSURIZATION DISK (FIXING SIDE)

8: PRESSURIZATION DISK (MOVING SIDE)

10: HYDRAULIC JACK

11: RESISTOR